Europäisches Patentamt

European Patent Office

Office européen des brevets

(11) Veröffentlichungsnummer: **0 443 702 A2**

## (12) EUROPÄISCHE PATENTANMELDUNG

(21) Anmeldenummer: **91250052.7**

(51) Int. Cl.5: **G01N 21/59**

(22) Anmeldetag: **22.02.91**

(30) Priorität: **22.02.90 DE 4005864**

(43) Veröffentlichungstag der Anmeldung:
**28.08.91 Patentblatt 91/35**

(84) Benannte Vertragsstaaten:
**BE CH DE ES FR GB IT LI NL**

(71) Anmelder: **Heinrich-Hertz-Institut für
Nachrichtentechnik Berlin GmbH
Einsteinufer 37
W-1000 Berlin 10(DE)**

(72) Erfinder: **Sartorius, Bernd, Dr.rer.nat.
Württembergallee 22
W-1000 Berlin 19(DE)**

(74) Vertreter: **Wolff, Konrad
Heinrich-Hertz-Institut für
Nachrichtentechnik Berlin GmbH
Einsteinufer 37
W-1000 Berlin 10(DE)**

(54) Messverfahren zur Bestimmung kleiner Lichtabsorptionen.

(57) Moderne Technologien, insbesondere auf dem Gebiet der Halbleiter, erfordern das Messen immer kleinerer Lichtabsorptionen in beliebigen Materialien. Die Anforderungen an Meßgenauigkeit und Meßgeschwindigkeit wachsen dabei ebenso, wie der Wunsch nach einfacher und damit ökonomischer Verfahrensführung.

Das erfindungsgemäße Meßverfahren basiert auf der Verwendung eines Meß- und Referenzlichtstrahls (M,R) unterschiedlicher Wellenlängen zur Eliminierung von Störeffekten. Die aus den Transmissionsintensitäten ($I_{Mc}$,$I_{Rc}$) detektierten Meß- und Referenzsignale ($U_{Mc}$,$U_{Rc}$) werden einer Differenzbildung (D) zugeführt, mit der unter automatischer Berücksichtigung (B) des natürlichen Intensitätsunterschieds ($\Delta I_N$) von Meß- und Referenzlichtstrahl (M,R) hochgenau aufgrund der mathematischen Zusammenhänge und extrem schnell aufgrund der direkten Meßmethode die gesuchten Lichtabsorptionen (LA) gleichsam direkt gemessen werden. Die automatische Berücksichtigung (B) kann durch eine optische Abstimmung (OA) oder eine elektronische Abstimmung (EA) der gebildeten Differenz auf Null erfolgen und trägt wesentlich zur Einfachheit des Meßverfahrens bei.

Fig.1

Die Erfindung bezieht sich auf ein Meßverfahren zur Bestimmung kleiner Lichtabsorptionen in beliebigen Materialien mit einer zumindest quasigleichzeitigen Detektion der Transmissionsintensitäten eines Meß- und eines Referenzlichtstrahls derart unterschiedlicher Wellenlängen, daß im wesentlichen der Meßlichtstrahl von dem zu untersuchenden Material absorbiert wird, und mit einer analogen gemeinsamen Erfassung der detektierten Meß- und Referenzsignale unter Berücksichtigung des natürlichen Intensitätsunterschieds zwischen Meß- und Referenzlichtstrahl.

Durch den Einsatz von Meß- und Referenzlichtstrahl mit unterschiedlichen Wellenlängen können Störeinflüsse, die sich als systematische Fehler auf das Meßergebnis auswirken, weitgehend eliminiert werden. Dazu wird die Wellenlänge des Meßlichtstrahls so gewählt, daß dieser optimal von dem zu untersuchenden Material absorbiert wird. Optimale Absorption tritt bei Festkörpern, Flüssigkeiten und Gasen im Bereich charakteristischer Absorptionsbanden auf, sowie in Festkörpern oberhalb der Bandkante. Die Absorptionsfähigkeit eines Materials ist also stark von der Wellenlänge des transmittierenden Lichtstrahls abhängig. Zusätzlich wird der Meßlichtstrahl bei der Transmission durch das zu untersuchende Material noch von Störeinflüssen wie beispielsweise Reflexion, Streuung, Verschmutzung oder zusätzliche Absorption durch andere Medien geschwächt. Solche Störeinflüsse haben als generelle Verluste meist einen breiten Untergrund, weil sie nur eine schwache Abhängigkeit von der Wellenlänge haben. Die Wellenlänge des Referenzlichtstrahls wird der Meßwellenlänge benachbart, aber im transparenten Spektralbereich des zu untersuchenden Materials gewählt. Der Referenzlichtstrahl wird deshalb kaum absorbiert, sondern im wesentlichen nur von den Störeinflüssen geschwächt. Mit dem Referenzlichtstrahl wird also die Transmissionsintensität ohne Absorption ermittelt, mit dem Meßlichtstrahl dagegen die Transmissionsintensität mit Absorption. Bei der gemeinsamen Erfassung der detektierten Meß- und Referenzsignale ist die relative Intensitätsschwächung durch Störeinflüsse in beiden Lichtstrahlen weitgehend identisch. Korrigiert man die Signale bezüglich des natürlichen Intensitätsunterschieds zwischen den beiden Wellenlängen, so verbleibt nur die Intensitätsdifferenz, die physikalisch der Lichtabsorption des zu untersuchenden Materials entspricht.

Ein wie zuvor beschriebenes Meßverfahren ist aus dem Prospekt "Transmissions Photometer" der Firma Pier Electronic GmbH, Nassaustraße 35, D-6238 Hofheim-Wallau, bekannt. Mit diesem Verfahren werden kleine Lichtabsorptionen durch eine analoge gemeinsame Erfassung von mit hoher Wechselfrequenz alternierend detektierten Meß- und Referenzsignalen in Form ihres Quotienten bestimmt. Die Berücksichtigung des natürlichen Intensitätsunterschieds zwischen Meß- und Referenzlichtstrahl erfolgt durch rechnerische Einbeziehung eines Intensitäts-Quotienten beider Lichtstrahlen ohne Absorption durch das zu untersuchende Material. Die Lichtabsorptionen werden bei diesem bekannten Verfahren also indirekt bestimmt, da der ermittelte Quotient kein direktes Maß für die Lichtabsorption ist. Diese berechnet sich erst aus der Differenz der Zahl 1 zu dem Quotienten. Mit dieser Umrechnung ist jedoch eine verstärkte Fehlerfortpflanzung verbunden. Bei kleinen Absorptionen führen nämlich relativ starke Änderungen der Lichtabsorption (z.B. von 1% auf 2%, d.h. relativ um 100%) nur zu kleinen Änderungen des Quotienten (z.B. von 0,99 auf 0,98, d.h. relativ um 1%). Selbst kleine Meßfehler oder Digitalisierungssprünge bewirken somit eine sehr viel größere Ungenauigkeit bei der Bestimmung der Lichtabsorption. Insbesondere bei kleinen Lichtabsorptionen kann der Fehler daher ohne weiteres die Größenordnung der Absorption annehmen oder überschreiten.

In der Weiterentwicklung der Technik wird es bei vielen Anwendungsfällen des beschriebenen Meßverfahrens immer wichtiger, auch kleine Lichtabsorptionen hochgenau messen zu können. Hiermit im Zusammenhang steht auch das Bestreben, die Lichtabsorption sehr schnell zu messen. Darüberhinaus soll ein Meßverfahren in seinem Ablauf und in seinen Mitteln zur Durchführung stets einfach und damit ökonomisch sein.

Derart hohe Anforderungen erfüllt das Meßverfahren nach der vorliegenden Erfindung dadurch, daß die kleinen Lichtabsorptionen direkt gemessen werden durch die gemeinsame Erfassung der detektierten Meß- und Referenzsignale in Form einer Differenzbildung unter automatischer Berücksichtigung des natürlichen Intensitätsunterschieds zwischen Meß- und Referenzlichtstrahl durch eine Abstimmung der gebildeten Differenz auf Null bei einer Messung ohne das zu untersuchende Material.

Durch die direkte Messung der Lichtabsorptionen ist das erfindungsgemäße Meßverfahren sehr genau und schnell. Die Messung kann als direkt bezeichnet werden, weil die analog gebildete Differenz zwischen Meß- und Referenzsignal die physikalische Definition der Absorption realisiert. Durch die automatische Berücksichtigung des natürlichen Intensitätsunterschieds steht damit ohne weiteren Rechen- und Zeitaufwand in einfacher Weise direkt der Meßwert für die gesuchte Lichtabsorption zur Verfügung. Verbunden mit der dadurch erreichten hohen Meßgeschwindigkeit ist eine hohe Meßauflösung, da der Auflösungsbereich nur die Größenordnung der Differenz und nicht die um ein Vielfaches größere Größenordnung der Einzelgrößen umfaßt. Eine erhebliche Verbesserung der Meßgenauigkeit wird bei dem erfindungsgemäßen Meßverfahren dadurch erreicht, daß der bei der direkten Differenzbildung eingehende meßtechnische Fehler nicht verstärkt wird. Das bedeutet, daß sich der absolute meßtechnische Fehler zu kleineren Lichtabsorptionen hin ebenfalls verkleinert, der entscheidende relative Fehler aber nahezu unverändert bleibt. Der Einfluß von Störgrößen, die nur schwach wellenlängenabhängig sind, wird durch die Differenzbildung ebenfalls derart verkleinert, daß er unerheblich wird. Zeitliche Schwankungen der Lichtquellen und der Auswerteelektronik werden bei dieser Art der direkten Differenzbildung weitgehend kompensiert.

Es ist zwar aus dem Aufsatz "Direct observation of the principal deep level (EL2) in undoped semiinsulating GaAs", Brozel et al., Appl.Phys.Lett 42(7), 1 April 1983, Seiten 610 ff, bekannt, aus den detektierten Meß- und Referenzsignalen eine Differenz zu bilden. Diese Differenz wird jedoch mathematisch berechnet. Dazu werden die Meß- und Referenzsignale einzeln, zeitlich versetzt digital erfaßt. Der dabei auftretende relative Fehler bezieht sich auf die erfaßten großen Einzelwerte. Er ist daher entscheidend größer als der relative Fehler, der bei der direkten Messung der wesentlich kleineren Differenz gemacht wird. Außerdem treten Sprungfehler bei der Digitalisierung auf. Weiterhin werden die Meß- und Referenzsignale in einem zeitlich großen Abstand zueinander detektiert, so daß der Meß- und Referenzlichtstrahl und die Auswerteelektronik zeitlich sehr stabil sein müssen. Die Meßergebnisse stehen erst nach Vorliegen aller Einzelsignale und deren rechnerischer Verabeitung zur Verfügung.

Eine direkte Messung der Lichtabsorption bzw. der Intensitätsdifferenz mittels einer analogen gemeinsamen Erfassung der detektierten Meß- und Referenzsignale ist aus dem Aufsatz "Experimental requirements for quantitative mapping of midgap flaw concentration in semi-insulating GaAs wafers by measurement of near infrared transmittance", Dobrilla et al., J.Appl. Phys. 58(1), 1 July 1985, Seiten 208 ff, bekannt. Bei diesem Meßverfahren wird zunächst an einem Referenzpunkt auf dem zu untersuchenden Material die Lichtabsorption mit hohem Aufwand genau bestimmt und elektronisch kompensiert. Bei den anschließenden Messungen wird dann die relative Lichtabsorption als Differenz zu der Absorption im Referenzpunkt direkt gemessen. Meß- und Referenzlichtstrahl haben jedoch die gleiche Wellenlänge. Reflexionsverluste als systematische Fehler werden deshalb mathematisch unter Inkaufnahme einer entsprechenden Diskrepanz zur Realität und eines großen Zeitaufwandes berücksichtigt. Streuverluste werden nicht berücksichtigt. Die Detektion von Meß- und Referenzlichtstrahl erfolgt in zeitlich großem Abstand; der Meßlichtstrahl, das Kompensationssignal und die Auswerteelektronik müssen entsprechend zeitstabil sein.

Trotz seiner hohen Meßgenauigkeit und -schnelligkeit ist das erfindungsgemäße Meßverfahren in seinem Ablauf und in seiner Realisierung einfach. Diese Einfachheit wird neben der unkomplizierten direkten Differenzbildung besonders durch die automatische Berücksichtigung des natürlichen Intensitätsunterschieds bei der Differenzbildung erreicht. Berücksichtigt werden muß der Intensitätsunterschied, um in der gebildeten Differenz ein direkt verwertbares Ergebnis zu haben, das unabhängig von den natürlichen, unterschiedlichen Intensitäten von Meß- und Referenzlichtstrahl aufgrund ihrer unterschiedlichen Wellenlängen ist. Gegenüber der rechnerischen Berücksichtigung im Stand der Technik erfolgt diese beim erfindungsgemäßen Verfahren automatisch. Dazu ist es lediglich erforderlich, die gemessene Differenz vor Beginn einer Meßreihe ohne das zu untersuchende Material auf Null einzuregeln. Die Kenntnis der einzelnen Parameter durch deren Messung oder Berechnung ist dazu nicht erforderlich. Diese Nullabstimmung gleicht den natürlichen Intensitätsunterschied zwischen Meß- und Referenzlichtstrahl aus, so daß alle Störparameter nahezu den gleichen Einfluß haben. Nur durch diesen Abgleich, durch den damit alle auftretenden Störgrößen im wesentlichen, d.h. bis auf eine geringe Differenz aufgrund ihrer sehr schwachen Wellenlängenabhängigkeit, bei der Differenzbildung eliminiert werden, wird die direkte Messung der Differenz bzw. Lichtabsorption überhaupt möglich und sinnvoll. Weiterhin können durch die Nullabstimmung auch Matrix-Effekte durch Umgebungseinflüsse weitgehend berücksichtigt werden.

Entsprechend einer vorteilhaften Ausgestaltung des erfindungsgemäßen Meßverfahrens kann eine Abstimmung der gebildeten Differenz auf Null optisch durch Schwächung der Intensität des stärkeren der beiden Lichtstrahlen erfolgen. Ein solcher Verfahrensschritt ist sehr einfach und erfordert nur ein unkompliziertes Verstellen beispielsweise eines Graukeils im entsprechenden Strahlengang. Bei dieser Ausführungsform wird die Reproduzierbarkeit der Graueinstellung beispielsweise über die Stellung einer Mikrometerschraube erreicht.

Eleganter, aber ebenso einfach mit demselben Effekt ist eine andere erfindungsgemäße Ausgestaltung, nach der die Abstimmung der gebildeten Differenz auf Null elektronisch durch Einstellen einer entsprechenden Gewichtung bei der Differenzbildung erfolgt. Bei dieser Ausführungsform kann die Nullabstimmung beispielsweise durch einen Rechner sehr genau durch die digitale Veränderung von Verstärkungsfaktoren vor der Differenzbildung über eine steuerbare Widerstandskaskade erfolgen. Die exakte Reproduzierbarkeit und eine ständige Kontrollmöglichkeit der Nullabstimmung sind damit gewährleistet. Es können keine mechanischen Justageprobleme und damit verbundene Losen auftreten. Die Nullabstimmung ist sehr zeitstabil.

Beide beschriebenen Nullabstimmungs-Methoden erfolgen direkt im Meßaufbau, d.h. sie haben einen engen Bezug zu dem Meßverfahren selbst, im Gegensatz zu beispielsweise einem rechnerischen Abgleich durch eine vorgegebene Kennlinie, der von dem eigentlichen Verfahren losgelöst wäre.

Nach einer anderen Ausgestaltung des erfindungsgemäßen Verfahrens werden Meß- und Referenzlichtstrahl jeweils von einer monochromatischen Lichtquelle erzeugt. Mögliche Lichtquellen sind beispielsweise Laserdioden. Diese gewährleisten aufgrund ihres geringen Strahldurchmessers eine hohe Ortsauflösung. Durch eine entsprechende optische Anordnung können die beiden Lichtstrahlen in einem Strahlengang in schnellem zeitlichem Wechsel durch das zu untersuchende Material geschickt werden. Die Abwechslung zwischen Meß- und Referenzlichtstrahl kann mechanisch durch einen Chopper oder elektrisch durch eine Modulation der Laserdioden erfolgen. Im ersten Fall wird immer ein Lichtstrahl verdeckt, im zweiten Fall werden die beiden Laserdioden im Wechselstrombetrieb gesteuert. In beiden Fällen kann eine Rechnersteuerung eingesetzt werden.

Aus dem Aufsatz "Active layer thickness measurement system for double heterostructure laser wafers", Nakano et al., OPTICAL ENGINEERING, January 1989, Vol. 28 No. 1, Seiten 042 ff, ist zwar zur Bestimmung der Netto-Absorption in Laser-Substraten der Einsatz zweier Laserdioden bekannt. Diese werden jedoch zeitlich in einem sehr großen Abstand nacheinander betrieben, d.h. das zu untersuchende Material wird zunächst komplett mit dem Meßlichtstrahl und dann mit dem Referenzlichtstrahl abgetastet. Dieses bedeutet einen hohen Zeitversatz der Einzelmessungen bei entsprechender Meßdauer.

Eine sehr gute Stabilisierung der Laserdioden zur Vermeidung von Leistungs- oder Temperaturdrift ist deshalb erforderlich. Ein Leistungsabgleich der beiden Laserdioden ist bei diesem bekannten Meßverfahren nicht vorgesehen. Das Leistungsverhältnis der beiden Laserdioden ohne Absorption wird eingerechnet. Die Meßergebnisse werden von einem Rechner ermittelt und liegen erst nach Beendigung des zweiten Abtastdurchgangs als Quotienten vor. Neben dem bereits erwähnten großen Fehlereinfluß bei der Bestimmung kleiner Lichtabsorption über Quotientenbildung aus Einzelwerten sind aufgrund der zeitlich weit auseinanderliegenden Meßdurchgänge mit zweimaligem Abrastern des zu untersuchenden Materials auch Justageprobleme zur Erreichung eines jeweils identischen Meßorts zu beherrschen.

Nach einer weiteren Ausgestaltung des erfindungsgemäßen Meßverfahrens ist es vorteilhaft, wenn Meß- und Referenzlichtstrahl aus einem nach der Material-Transmission optisch geteilten Lichtstrahl einer einzigen Lichtquelle herausgefiltert werden. Durch diesen Verfahrensschritt ist gewährleistet, daß der Meß- und der Referenzlichtstrahl im exakt gleichen Strahlengang, nämlich dem Strahlengang des gemeinsamen Lichtstrahls, durch das zu untersuchende Material hindurchtreten. Der Meßort ist damit genau definiert und für beide Strahlen identisch. Aufwendige Justagen zur Strahlüberdeckung am Meßort und im weiteren Strahlengang, ein Verschieben des zu untersuchenden Materials oder optische Strahlumlenkeinrichtungen sind so vermieden. Weiterhin wirken sich Schwankungen der Intensität der einzigen Lichtquelle auf Meß- und Referenzlichtstrahl gleich aus, so daß diese bei der Differenzbildung mit automatischer Berücksichtigung des natürlichen Intensitätsunterschieds kompensiert werden. Erfindungsgemäß wird der Lichtstrahl erst nach der Material-Transmission optisch geteilt, damit aus den entstandenen Einzelstrahlen der Meß- und der Referenzlichtstrahl herausgefiltert werden können. Bei der optischen Teilung ist es dabei unerheblich, in welchem Verhältnis der Lichtstrahl aufgeteilt wird, da dieses bei der Differenzbildung durch die zuvor durchgeführte Nullabstimmung bei unverändertem Teilungsverhältnis durch die dadurch erfolgende Symmetrierung der beiden Lichtstrahlen automatisch berücksichtigt wird. Die Ermittlung der Lichtabsorption als prozentuale Größe wird davon in ihrer Genauigkeit nicht beeinflußt. Es ist nicht einmal von Interesse, das Teilungsverhältnis zu kennen, es kann beliebig sein, so daß sich für die Realisierung der Teilung äußerst einfache Bauelemente verwenden lassen.

Wenn gemäß einer weiteren vorteilhaften Ausgestaltung des erfindungsgemäßen Verfahrens Meß- und Referenzlichtstrahl alternierend in einer ersten und der Referenzlichtstrahl zusätzlich in einer zweiten Frequenz getaktet werden, kann für die analoge Erfassung der Meß- und Referenzsignale die allgemein bekannte Lock-In-Verstärkungstechnik eingesetzt werden. Hiermit ist man in der Lage, die detektierten Signale aufgrund der ihnen künstlich aufgeprägten Frequenzen zu unterscheiden. Ein derartiger Verfahrensschritt ist immer dann sinnvoll, wenn die Meß- und Referenzsignale durch einen einzigen Detektor erzeugt werden. Es können somit bei dem Einsatz von zwei Frequenzen gemäß der Erfindung zum einen die Meß- und Referenzsignale für die Differenzbildung und zum anderen zusätzlich zum Beispiel nur die Referenzsignale für Normie-rungszwecke erfaßt und verarbeitet werden. Außerdem können weitere Störeinflüsse, insbesondere allgemeine Hintergrundstörungen, wie Raumlicht oder Staub im Strahlengang, mit der Lock-In-Verstärkungstechnik eliminiert werden. Es werden dazu nur die Signale bearbeitet, die den zuvor bestimmten Frequenzen und auch Phasen zugeordnet sind. Störungen mit anderen Frequenzen und anderen Phasen werden nicht berücksichtigt.

Wenn Meß- und Referenzlichtstrahl aus einem einzigen Lichtstrahl herausgefiltert werden, ist es entsprechend einer weiteren vorteilhaften Ausgestaltung des erfindungsgemäßen Verfahrens sinnvoll, daß der gemeinsame Lichtstrahl getaktet wird. Hierbei kann dann wiederum die Lock-In-Verstärkungstechnik mit ihren bereits genannten Vorteilen eingesetzt werden. Da nur eine Frequenz benutzt wird, kann die Zeitkonstante des Lock-In-Verstärkers sehr klein gewählt werden, was zu kurzen Einstellzeiten und daher hoher Meßgeschwindigkeit führt. Zur Unterscheidung der Meß- und Referenzsignale zur Differenzbildung und zu Normierungszwecken werden hierbei zwei Detektoren eingesetzt, bei denen es sich um einfache elektronische Bauteile handelt.

Eine andere, sehr wichtige vorteihafte Weiterbildung des erfindungsgemäßen Meßverfahrens sieht vor, daß die Detektion der Transmissionsintensitäten von Meß- und Referenzlichtstrahl gleichzeitig erfolgt. Durch diesen Schritt von der Quasi-Gleichzeitigkeit der Detektion im Stand der Technik zur echten Gleichzeitigkeit entfallen zunächst zeitabhängige Störeinflüsse, wie Kennlinien- und Temperaturdrift der Lichtquellen, der Detektoren oder der Auswerteeinheit. Darüberhinaus wird aber auch die Meßgeschwindigkeit erhöht, da kein Signal bis zum Eintreffen eines weiteren Signals mehr zwischengespeichert werden muß. Deshalb werden auch die mit der Zwischenspeicherung verknüpften Fehler vermieden. Mit dem Wegfall der Zwischenspeicherung aufgrund der gleichzeitigen Detektion ist auch die Möglichkeit verbunden, kontinuierliche Meßreihen aus den analog erfaßten Meßwerten bilden zu können. Die Diskretisierung der Meßwerte aufgrund der Zwischenspeicherung entfällt. Das zu untersuchende Material kann also nach dieser Ausgestaltung des erfindungsgemäßen Verfahrens kontinuierlich, beispielsweise in einem Massenstrom oder über eine Oberfläche, auf sein Absorptionsverhalten hin, welches sich auch zeitlich extrem schnell ändern kann, untersucht werden. Voraussetzung für eine gleichzeitige Detektion ist, daß Meß- und Referenzlichtstrahl nach Durchtritt durch das zu untersuchende Material gleichzeitig vorliegen, um parallel auf zwei Detektoren geleitet werden zu können. Diese Voraussetzung wird durch die oben beschriebene erfindungsgemäße Ausgestaltung in einfacher Weise erfüllt, indem Meß- und Referenzlichtstrahl aus einem einzigen Lichtstrahl nach dessen Teilung herausgefiltert werden.

In einer anderen Weiterbildung des erfindungsgemäßen Meßverfahrens ist vorgesehen, die kleinen Lichtabsorptionen ortsabhängig zu messen. Hierdurch kann die gemessene Absorption einem bestimmten Ort zugeordnet werden. Das ist besonders vorteilhaft, wenn Inhomogenitäten vorliegen, wie dies häufig bei Festkörpern der Fall ist. Durch Variation des Ortes kann dann die Absorption über die gesamte Oberfläche des Festkörpers diskret oder kontinuierlich - je nach Wahl des entsprechenden Verfahrensschritts - ermittelt werden.

Vorteilhaft ist es gemäß einer weiteren Ausgestaltung bei einer ortsabhängigen Messung weiterhin, daß Meß- und Referenzlichtstrahl auf den Meßort fokussiert werden. Durch diese Maßnahme wird der eigentliche Meßort sehr klein , was eine Erhöhung der Ortsauflösung bedeutet.

Im allgemeinen liegt der Fokus bzw. der Meßort zur Bestimmung der Absorption in einem Festkörper auf dessen Oberseite mit der auszumessenden Schicht, die von der Lichtquelle abgewendet ist, um eine hohe Ortsauflösung zu gewährleisten. Streuungen an seiner Rückseite können mit einer normalen Sammellinse erfaßt werden, wenn die Rückseite als relativ glatt angesehen werden kann. Bei einem Festkörper mit rauher Rückseite als zu untersuchendes Material ist es jedoch gemäß einer weiteren Ausgestaltung des erfindungsgemäßen Verfahrens vorteilhaft, wenn der Fokus auf dessen Rückseite liegt. So kann die Absorption durch den Festkörper exakt bestimmt werden, ohne daß Streuungen des Lichtstrahls an der rauhen Rückseite zu Verfälschungen führen könnten. Die auftretende Streuung auch an extrem rauhen Oberflächen liegt dann im Fokus einer nachgeordneten Sammellinse, deren Apertur lediglich so groß gewählt sein muß, daß sie das gestreute Licht im Vergleich zum Beleuchtungskegel nahezu vollständig erfaßt.

Gemäß einer weiteren Ausgestaltung des Meßverfahrens nach der Erfindung ist es vorteilhaft, wenn bei einem zu untersuchenden Material mit opaker oder reflektierender Rückseite die Detektion der Transmissionsintensitäten auf der Auflichtseite erfolgt. Durch diesen Verfahrensschritt wird eine Anwendung des Meßverfahrens auch für eine kontinuierliche Prozessüberwachung in Flüssigkeiten oder Gasen oder für Festkörper möglich, die eine Transmission von Meß- und Referenzlichtstrahl durch ihre Rückseite hindurch nicht zulassen. Voraussetzung ist, daß Meß- und Referenzlichtstrahl an der Rückseite des zu untersuchenden Materials oder, wenn dieses das Licht nicht ausreichend reflektiert, an einem direkt an die Rückseite anschließenden zusätzlichen Spiegel reflektiert werden. Diese Voraussetzung trifft bei Beobachtungsräumen für Prozessabläufe in flüssigen oder gasförmigen Medien mit einem Spiegel an der Raumrückwand oder insbesondere bei Festkörperproben mit Metallkontakten oder auf Metallträgern zu. Von Vorteil ist auch, daß der Meßaufbau bei dieser Verfahrensweise relativ wenig Platz benötigt. Für Proben in Kryostaten, Präparationskammern o.ä. ist diese erfindungsgemäße Ausgestaltung des Meßverfahrens deshalb besonders geeignet. Gleiches gilt für Proben, die nur von einer Seite zugänglich sind. Bei diesem Verfahrensschritt ist die auftretende zweimalige Absorption entsprechend zu berücksichtigen. Weiterhin ist das Referenzsignal bezüglich eines Anteils zu korrigieren, der bereits an der Probenoberfläche reflektiert wird und somit nicht zur Absorption beiträgt.

Ist der an der Oberfläche des zu untersuchenden Materials reflektierte Lichtanteil unbekannt oder veränderlich, so kann er rechnerisch nicht berücksichtigt werden. Dann ist es entsprechend einer weiteren Ausgestaltung des erfindungsgemäßen Meßverfahrens vorteilhaft, wenn das zu untersuchende Material nach dem Dunkelfeld-Prinzip beleuchtet wird. Mit diesem an sich bekannten Verfahren wird der an der Probenoberfläche reflektierte Lichtanteil, der nicht der Absorption zugeführt wird, aus dem Strahlengang ausgeblendet, so daß er nicht detektiert werden kann. Der der Absorption zugeführte Lichtanteil wird dagegen in einem so großen Raumwinkel gestreut, daß er an der Ausblendeinrichtung vorbeifällt und detektiert werden kann.

Eine andere Weiterbildung des erfindungsgemäßen Meßverfahrens sieht vor, daß es mit dem Lumineszenz-Meßverfahren zur Ermittlung charakteristischer Eigenschaften des zu untersuchenden Materials gekoppelt ist. Das Lumineszenz-Meßverfahren ist allgemein bekannt. Es arbeitet mit einem kurzwelligen Laser zur Lumineszenz-Anregung, einem dichroitischen Spiegel, der Strahlung abhängig von ihrer Wellenlänge reflektiert oder transmittiert, und einem durchstimmbaren Monochromator mit nachgeschaltetem Detektor zur Aufnahme der langwelligen Emissionsspektren. Mit Hilfe der Lumineszenz können charakteristische Eigenschaften des zu untersuchenden Materials, insbesondere von Halbleitern und hier speziell die Bandkante, ermittelt werden. Durch die Kopplung der beiden Meßverfahren, die beispielsweise über einen Umlenkspiegel optisch erfolgen kann, können für das zu untersuchende Material in einer einzigen Präparation und Anordnung zunächst die notwendigen charakteristischen Eigenschaften und dann die kleinen Lichtabsorptionen bestimmt werden; dies bedeutet eine große Zeit- und Arbeitseinsparung, sowie eine nur geringe Belastung des zu untersuchenden Materials. In teuren Reinräumen ist auch die Platzeinsparung durch Kombination der beiden Verfahrensanordnungen wesentlich.

Die Anwendungsmöglichkeiten für das erfindungsgemäße Meßverfahren zur Bestimmung kleiner Lichtabsorptionen sind vielfältig. Ein besonderes Kriterium für sein Einsatzgebiet ist, daß es zerstörungsfrei und ohne jegliche Beeinträchtigung des zu untersuchenden Materials arbeitet. Die Absorptionsmessungen können bei festen, flüssigen und gasförmigen Materialien durchgeführt werden. Sie können diskret oder kontinuierlich, ortsunabhängig bei strömenden Materialien oder ortsaufgelöst bei Festkörpern durchgeführt werden.

Die ermittelten Lichtabsorptionswerte können für verschiedene Bestimmungen herangezogen werden. Um diese Bestimmungsmöglichkeiten näher erläutern zu können, ist es hilfreich, die mathematische Formel zu betrachten, aus der sich die Lichtabsorption betrechnet:

$$I = I_o * e^{-kd}$$

mit:

$I$ : Lichtintensität mit Absorption
$I_o$ Lichtintensität ohne Absorption
$k$ : Absorptionskoeffizient
$d$ : Materialdicke

Für kleine Werte von $kd$ kann der Faktor $e^{-kd}$ durch seine Taylor-Entwicklung ersetzt werden:

$$e^{-kd} = 1 - kd + (kd)^2/2 - (kd)^3/6 + ....$$

Da die Potenzglieder bei kleinem $kd$ extrem klein werden, kann in guter Näherung gesetzt werden:

$$e^{-kd} \approx 1 - kd$$

Daraus ergibt sich für $I$ :

$$I = I_o * (1 - kd)$$

beziehungsweise:

$$(I_o - I)/I_o = kd$$

wobei die Differenz $I_o - I$ die mit dem erfindungsgemäßen Meßverfahren direkt meßbare Lichtabsorption ist.

Kennt man nun durch Anwendung des erfindungsgemäßen Meßverfahrens die Lichtabsorption $I_o - I$ und $I_o$ als Intensität des Referenzlichtstrahls ohne Absorption, so kann man gemäß der Formel den Absorptionskoeffizienten $k$ des zu untersuchenden Materials ermitteln, wenn man dessen Dicke kennt oder umgekehrt die Dicke ermitteln, wenn der Absorptionskoeffizient bekannt ist. Bei Sandwich-Proben kann man hierbei die Dicken der unterschiedlichen Schichten selektiv bestimmen, wenn diese unterschiedliche Bandkanten und damit unterschiedliches Absorptionsverhalten aufweisen. Als dritte Möglichkeit kann man bei bekannter Dikke und bekanntem Absorptionskoeffizienten des zu untersuchenden Materials Konzentrationsbestimmungen von für die Absorption verantwortlichen Spezia, wie z.B. Störatome in Festkörpern oder Fremdmedien bzw. Partikel in Flüssigkeiten oder Gasen, durchführen. Auch Stoffanalysen biologischer oder chemischer Präparate sind möglich.

Von besonderem Interesse jedoch ist das erfindungsgemäße Meßverfahren zur Bestimmung kleiner Lichtabsorptionen für die Schichtdickenbestimmung von Halbleitermaterialien. Durch moderne Technologien in der Herstellung und Verarbeitung solcher Halbleiterschichten werden diese immer dünner, aber auch immer störanfälliger. Deshalb ist es erforderlich geworden, derartige Halbleiterschichten extrem genau in ihrer Dicke, die im Extremfall nur noch 1 nm betragen kann, und in ihrer Zusammensetzung zu kontrollieren. Abweichungen in der Dicke, unerwünschte Strukturfehler oder schlechte Verteilung von Dotierungs-Material können zur Unbrauchbarkeit des Halbleiters führen. Dies gilt insbesondere für den Einsatz bei den sogenannten "Quantum-Wells-Lasern". Bei solchen Lasern können die Wellenlänge eingestellt und der Schwellstrom minimiert werden durch die Wahl der Schichtdicke, die so enorm dünn ist, daß sich bereits das Festkörperverhalten des Materials ändert. Darüberhinaus ist es in der Produktion extrem wichtig, jeden Halbleiterchip vollständig prüfen zu können. Stichproben an Teilstellen oder zerstörende Prüfungen sind hier sinnlos. Gerade für diesen Anwendungsfall ist das erfindungsgemäße Meßverfahren hervorragend geeignet. Es kann einen Schichtdickenmeßbereich von ca. 0,01 bis 2 $\mu$m umfassen, arbeitet zerstörungsfrei, extrem genau, sehr schnell und läßt kontinuierliche Schichtdickenbestimmungen zu. Deshalb wird in den Ausführungsbeispielen verstärkt auf diese Anwendungsart Bezug genommen.

Anhand der Figuren werden nachfolgend das erfindungsgemäße Meßverfahren sowie besonders bevorzugte Ausführungsformen zu seiner Durchführung näher erläutert. Die Darstellungen in den Figuren sind schematisch.

Es zeigen dabei die

Figur 1:  den prinzipiellen Verfahrensablauf in drei Stufen,

Figur 2:  eine Anordnung zur Durchführung des erfindungsgemäßen Meßverfahrens mit einer Lichtquelle und zwei Detektoren,

Figur 3:  eine Anordnung zur Durchführung des erfindungsgemäßen Meßverfahrens mit einer Lichtquelle und einem Detektor,

Figur 4:  einen Ausschnitt einer Anordnung zur Durchführung des erfindungsgemäßen Meßverfahrens mit zwei Lichtquellen und einem Detektor,

Figur 5  : einen Ausschnitt einer Anordnung mit Auflicht-Beleuchtung zur Durchführung des erfindungsgemäßen Meßverfahrens und die

Figur 6:  eine Anordnung zur Durchführung des erfindungsgemäßen Meßverfahrens in Kombination mit dem Lumineszenz-Meßverfahren.

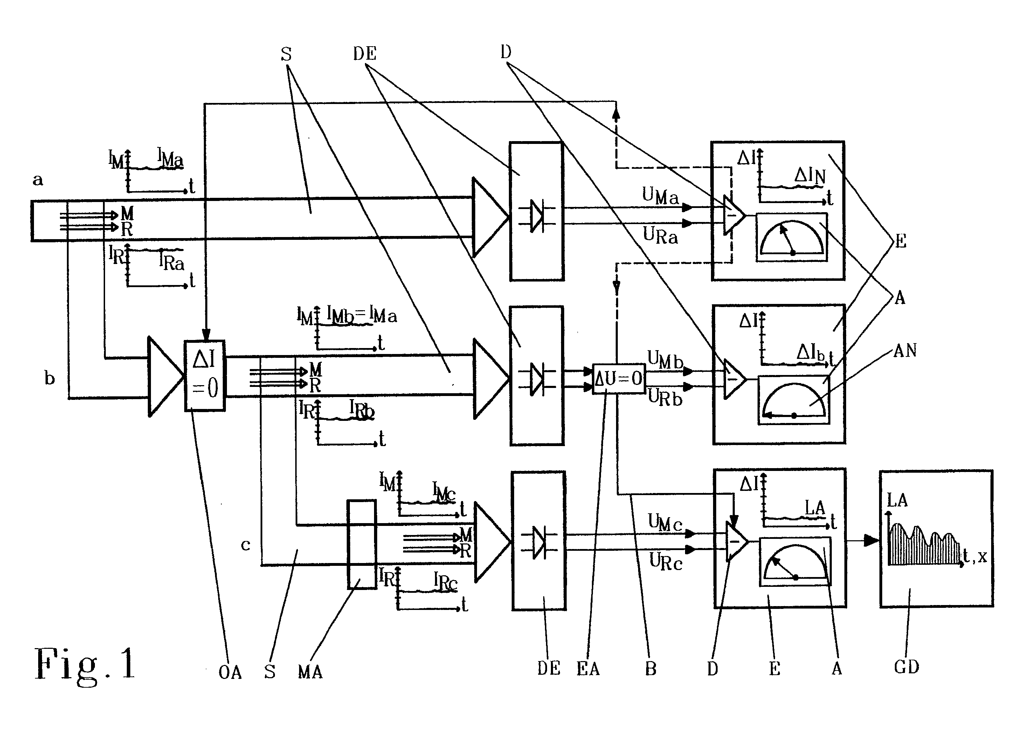

Der in der Figur 1 schematisch dargestellte Ablauf des erfindungsgemäßen Meßverfahrens zur Bestimmung kleiner Lichtabsorptionen ist in drei Verfahrensstufen a,b,c, unterteilt. In der Vorstufe a wird eine Grundmessung ohne das zu untersuchende Material MA durchgeführt, um den Ist-Zustand der Meßanordnung festzustellen. In der Abstimmungsstufe b wird dann eine in der Vorstufe a gegebenenfalls festgestellte Nullabweichung abgestimmt. In der Meßstufe c schließlich wird die eigentliche Meßreihe durchgeführt. Der Überschaubarkeit wegen sind die drei Verfahrensstufen a,b,c in zeitlicher Abfolge dargestellt. Auftretende Intensitäten $I_M, I_R$ sind jeweils über der Meßzeit t in kleinen Diagrammen aufgetragen, die der Verdeutlichung der Zusammenhänge dienen sollen.

Zur Durchführung der Grundmessung in der Vorstufe a werden ein Meßlichtstrahl M mit einer gewählten Meßwellenlänge $\lambda_M$ und einer von der Erzeugungsquelle abhängigen Grundintensität $I_{Ma}$ sowie ein Referenzlichtstrahl R mit einer gewählten Referenzwellenlänge $\lambda_R$ und einer ebenfalls von der Erzeugungsquelle abhängigen Grundintensität $I_{Ra}$ einer Detektion DE zugeführt. Abhängig von der Art der Erzeugungsquelle können Meß- und Referenzlichtstrahl M,R als Einzelstrahlen oder gemeinsam auftreten. In der Figur 1 ist dies angedeutet durch einen übergeordneten Strahlengang S, in dem Meß- und Referenzlichtstrahl M,R enthalten sind. Die Detektion DE der Grundintensitäten $I_{Ma}$ und $I_{Ra}$ kann quasi-gleichzeitig bei zeitlich schnell abwechselnder Zuführung von Meß- und Referenzlichtstrahl M,R oder exakt gleichzeitig bei zeitlich paralleler Zuführung erfolgen.

Durch die Detektion DE entstehen ein Meßsignal $U_{Ma}$ und ein Referenzsignal $U_{Ra}$. Diese werden einer analogen gemeinsamen Erfassung E zugeleitet. Diese gemeinsame Erfassung E erfolgt in Form einer Differenzbildung D zwischen Meß- und Referenzsignal $U_{Ma}, U_{Ra}$. Als Ergebnis dieser Differenzbildung D wird eine Intensitätsdifferenz $\Delta I$ zwischen den Intensitäten $I_{Ma}, I_{Ra}$ als direkt gemessene Lichtabsorption LA mit einer analogen Anzeigeeinrichtung A angezeigt. Bei der Grundmessung in Vorstufe a kann jedoch keine Lichtabsorption LA auftreten, da kein absorbierendes Material MA im Strahlengang S vorhanden ist. Bei der angezeigten

Intensitätsdifferenz $\Delta I$ handelt es sich daher um einen natürlichen Intensitätsunterschied $\Delta I_N$ zwischen Meß- und Referenzlichtstrahl M,R, der seine Ursache in den unterschiedlichen Wellenlängen $\lambda_m, \lambda_R$ hat und zu einer unterschiedlichen Gewichtung von Meß- und Referenzlichtstrahl M,R führt. Bliebe dieser Unterschied $\Delta I_N$ unberücksichtigt, würde er jedes Meßergebnis verfälschen, so daß die auf der analogen Anzeigeeinrichtung A angezeigten Werte keine schnelle und direkte Aussage über die gemessene Lichtabsorption LA zuließen. Deshalb erfolgt bei dem Meßverfahren eine automatische Berücksichtigung B des natürlichen Intensitätsunterschieds $\Delta I_N$ in Form einer Abstimmung AN der Differenzbildung D auf Null. Dadurch kann jetzt jedes folgende, mit der analogen Anzeigevorrichtung A angezeigte Meßergebnis ohne zusätzliche Aufbereitung als direkt gemessene Lichtabsorption LA interpretiert werden.

Die Abstimmung AN der Differenzbildung D auf Null erfolgt in einer Abstimmungsmessung in der Abstimmungsstufe b. Es kann eine optische Nullabstimmung OA oder eine elektronische Nullabstimmung EA durchgeführt werden. Diese Alternative ist in der Figur 1 durch eine Strichelung der Wirkungslinien bei der Differenzbildung D in der Vorstufe a dargestellt. Durchgeführt wird jedoch jeweils nur eine der beiden Abstimmungsmöglichkeiten, wobei beide dieselbe Wirkung erzielen. Bei Durchführung der optischen Nullabstimmung OA wird der stärkere der beiden Lichtstrahlen M,R soweit geschwächt, bis die mit der analogen Anzeigevorrichtung A angezeigte Differenz $\Delta I_b$ zu Null wird ($I=0$). Bei dem in der Figur 1 dargestellten Beispiel ist die Grundintensität $I_{Ra}$ des Referenzlichtstrahls R größer als die Grundintensität $I_{Ma}$ des Meßlichtstrahls M. Also wird der Referenzlichtstrahl R beispielsweise mit einem Graukeil soweit geschwächt, bis seine Abstimmungsintensität $I_{Rb}$ identisch ist mit der Grundintensität $I_{Ma}$ des Meßlichtstrahls M, der unbeeinflußt bleibt ($I_{Ma} = I_{Mb} = I_{Rb}$). Durch die optische Nullabstimmung OA sind nun der Meßlichtstrahl M und der Referenzlichtstrahl R optisch zueinander symmetriert, so daß sie nun stets der gleichen absoluten Abschwächung durch wellenlängenabhängige äußere Einflüsse unterliegen.

Das gleiche Ergebnis erreicht man auch, wenn man die Symmetrierung nicht optisch sondern elektronisch mit der elektronischen Nullabstimmung EA vornimmt. Hierbei bleiben die Intensitäten $I_{Ma}$ und $I_{Ra}$ unverändert, es gehen jedoch ihre entsprechenden Meß- und Referenzsignale $U_{Ma}, U_{Ra}$ durch die Einstellung einer entsprechenden Gewichtung bei der Differenzbildung D elektrisch unterschiedlich ein, so daß sich die Signale $U_{Mb}$ und $U_{Rb}$ ergeben, deren Differenz dann Null ist ($\Delta U = 0$). Die Gewichtung kann beispielsweise durch eine rechnergesteuerte Veränderung von Verstärkungsfaktoren bei der Differenzbildung D eingestellt werden.

Neben der Abstimmung AN auf Null aufgrund des natürlichen Intensitätsunterschieds $\Delta I_N$ können mit dieser Abstimmung AN auch Matrix-Effekte weitgehend kompensiert werden. Dazu wird in der Abstimmungsstufe b beispielsweise eine das Meßergebnis gegebenenfalls verfälschende Substratscheibe (ohne absorbierende Schicht) oder ein Lösungsmittel (ohne die zu analysierende Substanz) in den Strahlengang S eingebracht und die Intensitätsdifferenz $\Delta I$ auf Null abgestimmt.

Nach Durchführung der Abstimmungsmessung in der Abstimmungsstufe b mit der optischen Abstimmung OA oder der elektronischen Abstimmung EA und gegebenenfalls einer Kompensation von Matrix-Effekten wird jetzt der natürliche Intensitätsunterschied $\Delta I_N$ durch seine automatische Berücksichtigung B in seinem Einfluß auf das Meßergebnis stets neutralisiert. Es kann jetzt in der Meßstufe c die eigentliche Messung erfolgen. Dazu wird das zu untersuchende Material MA in den Strahlengang S eingebracht, so daß Meß- und Referenzlichtstrahl M,R transmitieren. Dabei wird der Meßlichtstrahl M aufgrund seiner Meßwellenlänge $\lambda_M$, die oberhalb der Absorptionskante bzw. im Bereich einer Absorptionsbande des Materials MA gewählt wurde, von dem Material MA optimal absorbiert. Weiterhin wird er durch zusätzliche Störeinflüsse, insbesondere Reflexion und Streuung, geschwächt. Seine Grundintensität $I_{Ma}$ erniedrigt sich auf die Transmissionsintensität $I_{Mc}$. Der Referenzlichtstrahl R hingegen weist die Referenzwellenlänge $\lambda_R$ auf, die im transparenten Spektralbereich des zu untersuchenden Materials MA nahe der Meßwellenlänge $\lambda_M$ gewählt ist. Er wird deshalb nur unwesentlich von dem Material MA absorbiert, sondern unterliegt in der Hauptsache den auftretenden Störeinflüssen. Seine Abstimmungsintensität $I_{Rb}$ (bei optischer Abstimmung OA; $I_{Ra}$ bei elektronischer Abstimmung EA) erniedrigt sich auf die Transmissionsintensität $I_{Rc}$, die aber in jedem Falle noch größer ist als die Transmissionsintensität $I_{Mc}$ des Meßlichtstrahls M. Durch die nachfolgende Detektion DE ergeben sich dann die Meß- und Referenzsignale $U_{Mc}$ und $U_{Rc}$ - (bei optischer Abstimmung OA; $U_{Ra}$ bei elektronischer Abstimmung EA). Diese werden der analogen Differenzbildung D nunmehr unter automatischer Berücksichtigung B des natürlichen Intensitätsunterschieds $\Delta I_N$ zugeführt. Das schnelle und hochgenaue Meßergebnis dieser Differenzbildung D als direkt gemessener Wert ist die Lichtabsorption LA durch das zu untersuchende Material MA. Alle Störeinflüsse wurden bei der Differenzbildung D weitgehend kompensiert.

Die Meßergebnisse der Lichtabsorptionen LA können anschließend beispielsweise in einer grafischen Darstellung GD verarbeitet werden. Die Darstelung kann kontinuierlich oder diskret je nach Art der Detektion DE, sowie ortsunabhängig über die gesamte Meßzeit t oder abhängig vom Meßort x je nach Art des zu untersuchenden Materials MA erfolgen.

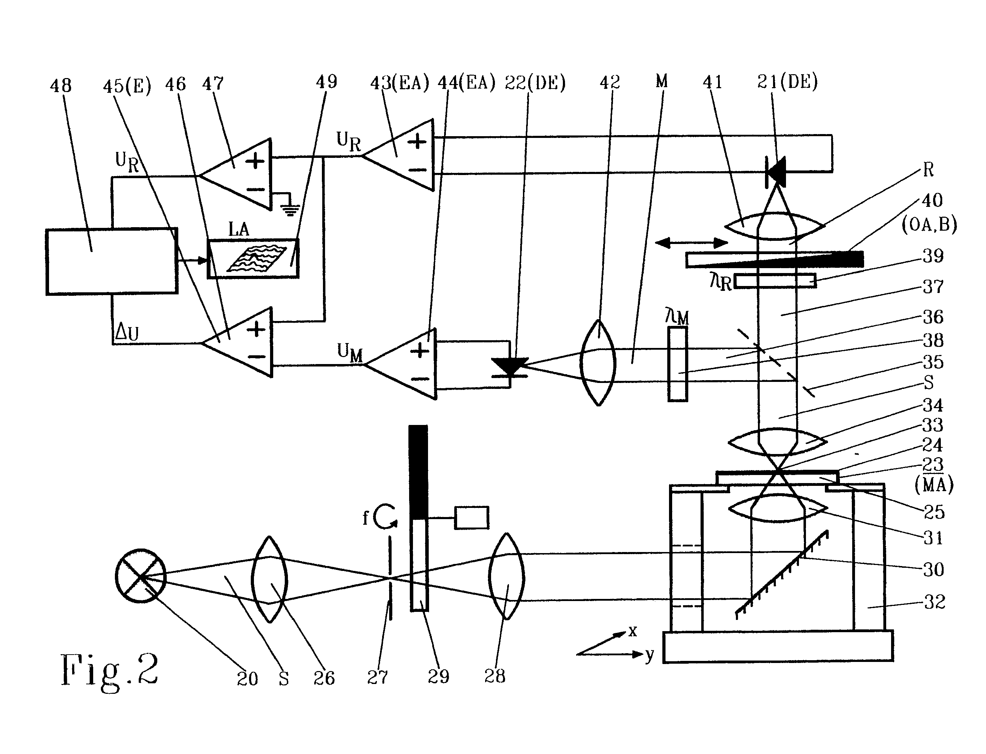

In der Figur 2 ist eine besonders bevorzugte Ausführungsform zur Durchführung des Meßverfahrens in schematischer Form dargestellt. Charakteristisch für diese Ausführungsform ist, daß sie eine einzige Lichtquelle 20 und zwei Detektoren 21,22 aufweist. Die Detektion DE erfolgt damit exakt gleichzeitig. Das zu untersuchende Material MA ist im dargestellten Beispiel ein Festkörper, dessen Dicke durch Messung der Lichtabsorption LA ermittelt werden soll. Bei dem Festkörper handelt es sich um einen epitaktischen Halbleiterchip 23 mit einer absorbierenden InGaAsP-Schicht 24, die auf einer transparenten InP-Schicht 25 epitaktisch aufgewachsen ist. Die absorbierende Schicht 24 weist eine Dicke zwischen 0,01 und 2 $\mu$m, die transparente Schicht 25 eine Dicke um 300 $\mu$m auf.

Ausgehend von der Lichtquelle 20 wird ein gemeinsamer Strahlengang S zunächst durch eine erste Sammellinse 26, dann durch ein Raumfilter 27 und danach durch eine zweite Sammellinse 28 zur besseren Strahlbündelung geleitet. Das Raumfilter 27 stellt einen Lichtquellenersatz dar und dient mit seiner starken Blende einer verbesserten Strahlfokussierung für eine hochgenaue Meßort-Auflösung. Hinter dem Raumfilter 27 ist ein rotierender Chopper 29 angeordnet, der den Strahlengang S als Wechsellicht, im Beispiel mit einer Frequenz f von 1 kHz, taktet. Hierdurch kann - wie später noch weiter ausgeführt wird - die allgemein bekannte Lock-In-Verstärkungstechnik eingesetzt werden. Hinter der zweiten Sammellinse 28 fällt der Strahlengang S auf einen Umlenkspiegel 30 und von dort durch eine dritte Sammellinse 31 auf den Halbleiterchip 23, der auf einem in zwei Richtungen x,y verfahrbaren Meßtisch 32 angeordnet ist. Ein Fokussierungspunkt 33 liegt aufgrund der glatten Rückseite 25 des Halbleiterchips 23 auf dessen Oberseite 24. Bei einem zu untersuchenden Festkörper mit einer rauhen Rückseite läge der Fokussierungspunkt 33 auf dieser rauhen Rückseite, um das Streulicht möglichst vollständig erfassen zu können. Der Durchmesser des Fokussierungspunkts 33 ist abhängig von der Qualität des Strahlengangs S und kann mit guter Genauigkeit 100 $\mu$m und weniger betragen.

Hinter dem Halbleiterchip 23 ist eine vierte Sammellinse 34 zur Strahlparallelisierung angeordnet, die eine große Apertur entsprechend des Streuwinkels des auftretenden Streulichts aufweist. Hinter dieser vierten Sammellinse 34 wird der Strahlengang S auf einen Strahlteiler 35 geleitet, der den Strahlengang S in zwei Einzelstrahlen 36,37 aufteilt. Aufgrund der Nullabstimmung ist das Teilungsverhältnis des Strahlteilers 35 nicht von Interesse, es wird automatisch berücksichtigt. Aus dem vom Strahlteiler 35 abgelenkten Einzelstrahl 36 wird mit einem Meßwellenlängen-Filter 38 der Meßlichtstrahl M mit der Meßwellenlänge $\lambda_M$ herausgefiltert. Diese ist entsprechend der Bandkante der absorbierenden InGaAsP-Schicht 24 des Halbleiterchips 23 so gewählt, daß der Meßlichtstrahl M maximal absorbiert wird. Außerdem erfährt er bei der Transmission noch eine Schwächung durch auftretende Störeffekte, in der Hauptsache Reflexion und Streuung. Der durch den Strahlteiler 35 hindurchtretende Einzelstrahl 37 wird durch einen Referenzwellenlängen-Filter 39 geleitet, wodurch der Referenzlichtstrahl R mit der Referenzwellenlänge $\lambda_R$ selektiert wird. Die Referenzwellenlänge $\lambda_R$ ist im transparenten Spektralbereich der InGaAsP-Schicht 24 in der Nähe der Bandkante so gewählt, daß die Lichtabsorption LA nur minimal ist. Deswegen wird der Referenzlichtstrahl R bei der Transmission durch den Halbleiterchip 23 in der Hauptsache durch die Störeffekte geschwächt.

Im dargestellten Ausführungsbeispiel wird der natürliche Intensitätsunterschied $\lambda I_N$ (s.Fig.1) zwischen Meß- und Referenzlichtstrahl M,R durch eine optische Abstimmung OA automatisch ausgeglichen. Hierzu ist ein variables Graufilter 40 im Referenzlichtstrahl R angeordnet. Dieses kann von Hand über eine Mikrometerschraube oder motorisch über eine Rechnersteuerung in seiner Stellung verändert werden. Nach der künstlichen Intensitätsschwächung durch das Graufilter 40 wird der Referenzlichtstrahl R dann durch eine fünfte Sammellinse 41 auf den ersten Detektor 21 geleitet. Der Meßlichtstrahl M fällt ohne weitere Beeinflussung durch eine sechste Sammellinse 42 auf den zweiten Detektor 22. Die absolut gleichzeitige Detektion DE mit den Detektoren 21,22 wird durch die beschriebene Anordnung dadurch ermöglicht, daß der eine Lichtstrahl S nach der Materialtransmission optisch geteilt wird und aus den entstandenen Einzelstrahlen 35,36 Meß- und Referenzlichtstrahl M,R herausgefiltert werden. Jeder der beiden Detektoren 21,22, bei denen es sich im Beispiel um InGaAs- oder Ge-Photodioden handelt, ist mit einem elektrischen Vorverstärker 43,44 verbunden, die den von den Detektoren 21,22 erzeugten Photostrom in Meß- und Referenzsignal $U_M,U_R$ in Form von Spannungen umwandeln. Mit Hilfe dieser Vorverstärker 43,44 kann auch ein elektronischer Abgleich durch rechnergesteuerte Variation ihrer Verstärkungsfaktoren durchgeführt werden.

Die erzeugten Meß- und Referenzsignale $U_M,U_R$ werden dann einer analogen gemeinsamen Erfassung E in Form eines Differenzverstärkers 45 zugeleitet, der aus den analogen Einzelsignalen $U_M,U_R$ die Signaldifferenz $\Delta U$ als Maß für die gesuchte Lichtabsorption LA bildet. Da diese Signal-

differenz $\Delta U$ sehr klein ist, kann sie mit hoher Auflösegenauigkeit gemessen werden. Bei dem Differenzverstärker 45 handelt es sich um einen ersten Lock-In-Verstärker 46, mit dem frequenz- und phasenselektiv allgemeine Störeinflüsse unterdrückt werden können. Nur die gesuchten Meß- und Referenzsignale $U_M, U_R$ werden von diesem ersten Lock-In-Verstärker 46 aufgrund ihrer mit dem Chopper 29 aufgeprägten Wechselfrequenz f phasenselektiv bearbeitet. Mit einem zweiten Lock-In-Verstärker 47 wird simultan zur analog ermittelten Signaldifferenz $\Delta U$ das Referenzsignal $U_R$ gemessen. Beide Meßgrößen $\Delta U, U_R$ sind zur Berechnung der Schichtdicke erforderlich. Diese Berechnung erfolgt im dargestellten Ausführungsbeispiel mit einem Computer 48 (Atari, VME-Bus, Rhotron). Mit diesem Computer 48 werden auch der Meßtisch 32 und das variable Graufilter 40 gesteuert und eine erforderliche Kalibrierung durchgeführt. Im Fall einer elektronischen Abstimmung EA kann der Computer 48 auch die Steuerung der Vorverstärkungsfaktoren übernehmen. Die berechneten Schichtdicken werden dann an einen Plotter 49 weitergeleitet, mit dem im Beispiel ein dreidimensionales Schichtdicken-Mapping von dem Halbleiterchip 23 hergestellt wird. Eine getrennte, direkte Darstellung der analog ermittelten Absorptionswerte (GD;s.Fig.1) ist bei diesem Ausführungsbeispiel nicht vorgesehen.

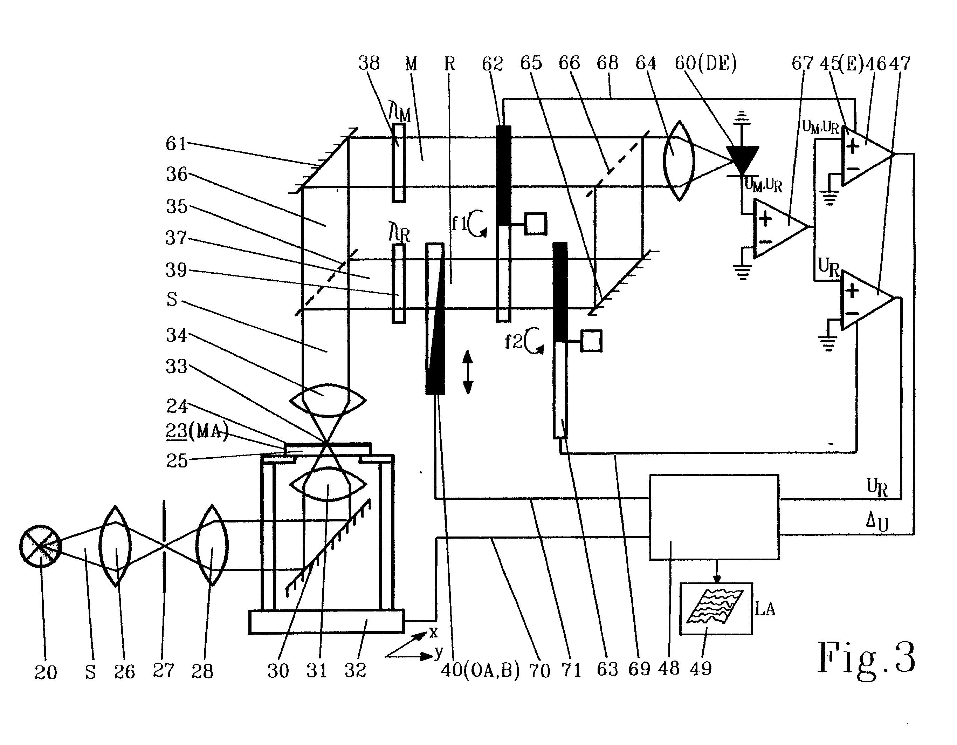

In Figur 3 ist eine Ausführungsanordnung zur Durchführung des Meßverfahrens schematisch dargestellt, die sich von dem Ausführungsbeispiel in Figur 2 im wesentlichen darin unterscheidet, daß nur ein einziger Detektor 60 verwendet wird. Die Detektion DE erfolgt damit quasi-gleichzeitig. Die Elemente, die mit dem optischen Aufbau in Figur 2 übereinstimmen, sind mit denselben Bezugszeichen versehen und werden hier nicht weiter erläutert.

Im dargestellten Ausführungsbeispiel wird der erste Einzelstrahl 36 durch einen weiteren Umlenkspiegel 61 parallel zum zweiten Einzelstrahl 37 geführt. Meß- und Referenzlichtstrahl M,R werden mit einem ersten Chopper 62 in einer ersten Frequenz f1 gemeinsam alternierend getaktet, und der Referenzlichtstrahl R mit einem zweiten Chopper 63 in einer zweiten Frequenz f2 zusätzlich getaktet. Die erste Taktung mit der Frequenz f1 bewirkt, daß Meß- und Referenzlichtstrahl M,R zeitlich schnell alternierend über eine weitere Sammellinse 64 auf den einen Detektor 60 geleitet werden. Zusätzlich erforderlich ist dafür eine optische Einkopplung des Referenzlichtstrahls R in den Strahlengang des Meßlichtstrahls M. Dies erfolgt über einen dritten Umlenkspiegel 65 und einen zweiten Strahlteiler 66. Über die beschriebene Einkopplungsanordnung 65,66 wird der Referenzlichtstrahl R noch zusätzlich mit der durch den zweiten Chopper 63 eingestellten Frequenz f2 dem Detektor 60 zugeführt. Der einzige Detektor 60 detektiert daher in der ersten Frequenz f1 abwechselnd Meß- und Referenzlichtstrahl M,R und in der zweiten Frequenz f2 nur den Referenzlichtstrahl R.

Die detektierten Meß- und Referenzsignale $U_M, U_R$ werden dann einem einzigen Vorverstärker 67 zugeführt. Da die Signale $U_M, U_R$ nur mit dem einen Detektor 60 und dem einen Vorverstärker 67 bearbeitet werden, ist eine mögliche Drift zwischen mehreren Detektoren und Vorverstärkern vermieden. Die automatische Berücksichtigung B des natürlichen Intensitätsunterschieds $\Delta I_N$ erfolgt ausschließlich durch die optische Abstimmung OA. Aufgrund der unterschiedlichen Modulation wird dann aus Meß- und Referenzsignal $U_M, U_R$ mit dem ersten Lock-In-Verstärker 46 bzw. dem Differenzverstärker 45 die Differenz $\Delta U$ gebildet, wobei der erste Lock-In-Verstärker 46 über eine Leitung 68 mit der Frequenz f1 des ersten Choppers 62 korreliert ist. Mit dem zweiten Lock-In-Verstärker 47 wird das Referenzsignal $U_R$ zusätzlich bereitgestellt. Über eine Leitung 69 wird dabei der zweite Lock-In-Verstärker 47 mit der Frequenz f2 des zweiten Choppers 63 korreliert. Die Auswertung erfolgt über den Computer 48. Dargestellt sind noch zusätzlich Steuerleitungen 70,71 zur automatischen Steuerung des Meßtischs 32 und des variablen Graufilters 40 zur optischen Abstimmung OA.

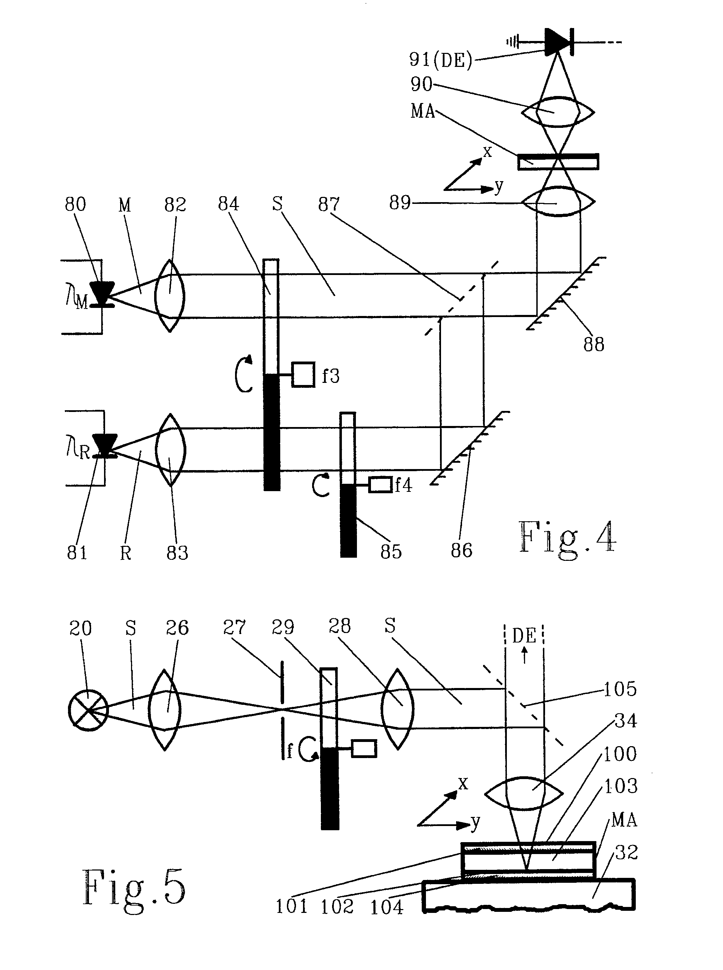

Figur 4 zeigt ausschnittsweise eine Meßanordnung für das Verfahren, die sich von den beiden vorhergehenden Ausführungsbeispielen in den Figuren 2 und 3 in der Erzeugung von Meß- und Referenzlichtstrahl M,R unterscheidet. Diese werden in den bereits beschriebenen Anordnungen durch Herausfilterung aus zwei Einzelstrahlen erzeugt, die durch optische Aufteilung eines einzigen Lichtstrahls einer Lichtquelle entstehen. Bei dem in der Figur 4 dargestellten Aufbau werden Meß- und Referenzlichtstrahl M,R direkt mittels zweier monochromatischer Lichtquellen erzeugt. Im gewählten Beispiel handelt es sich dabei um zwei leistungsstabilisierte Laserdioden 80,81 mit den entsprechend dem zu untersuchenden Material MA gewählten Wellenlängen $\lambda_M$ und $\lambda_R$. Durch Verwendung von scharf gebündeltem Laserlicht wird eine sehr hohe Ortsauflösung im Bereich von wenigen $\mu$m erreicht. Außerdem ist eine elektronische Abstimmung EA (s.Fig.1) durch Leistungsregelung der entsprechenden Laserdiode 80,81 möglich (nicht dargestellt).

Der weitere Strahlengang von Meß- und Referenzlichtstrahl M,R entspricht im wesentlichen dem aus Figur 3. Zunächst werden Meß- und Referenzlichtstrahl M,R zur weiteren Bündelung über Sammellinsen 82,83 geleitet und danach durch einen Chopper 84 gemeinsam alternierend in einer Frequenz f3 getaktet. Zusätzlich wird - aus den bereits beschriebenen Gründen - dem Referenzlichtstrahl R mit einem zweiten Chopper 85 noch die Frequenz f4 aufgeprägt. Da die verwendeten Laserdioden 80,81 auch im Wechselbetrieb sehr stabile Ausgangssignale erzeugen, können die mechanischen Chopper 84,85 auch durch eine elektrische Modulation ersetzt werden (nicht dargestellt). Dazu ist es lediglich erforderlich, die beiden Laserdioden 80,81 im Wechselstrombetrieb mit einer Phasenverschiebung von 180° anzusteuern, so daß sie alternierend ein- und ausgeschaltet werden. Zur Einkopplung des Referenzlichtstrahls R in den Strahlengang S des Meßlichtstrahls M für einen identischen Meßort auf dem zu untersuchenden Material MA wird der Referenzlichtstrahl R zunächst über einen Umlenkspiegel 86 und dann über einen Strahlteiler 87 geleitet. Beide Strahlen M,R werden im dargestellten Ausführungsbeispiel - zum Beispiel aus Platzgründen - noch über einen weiteren Umlenkspiegel 88 in ihrer Richtung um 90° geschwenkt. Vor und hinter dem zu untersuchenden Material MA ist wiederum je eine Sammellinse 89,90 vorgesehen. Das zu untersuchende Material MA ist in den Richtungen x,y durch einen nicht dargestellten Meßtisch (32;s.Fig.3) verschiebbar angeordnet. Die Detektion DE erfolgt durch einen einzigen Detektor 91, der identisch mit dem Detektor 60 aus Figur 3 sein kann.

Der weitere Aufbau hinter dem Detektor 91 stimmt mit dem in Fig.3 überein und ist daher hier nicht weiter dargestellt. Ebenfalls nicht dargestellt ist die automatische Berücksichtigung des natürlichen Intensitätsunterschieds $I_N$. Diese kann in schon beschriebener Weise durch eine optische Abstimmung (OA;s.Fig.2) durch Schwächung des entsprechenden Lichtstrahls vor dem Chopper 84 erfolgen oder durch eine elektronische Abstimmung (EA;s.Fig.2) mittels einer Leistungsregelung der entsprechenden Laserdiode 80,81.

Der in Figur 5 dargestelle Ausschnitt einer Anordnung zur Durchführung des Verfahrens stimmt im wesentlichen mit dem beschriebenen Aufbau in Figur 2 überein, der einzige Unterschied besteht darin, daß die Detektion DE (in Fig.5 nur angedeutet) auf einer Auflichtseite 100 des zu untersuchenden Materials MA erfolgt. Wegen der sonstigen Übereinstimmung sind die bereits beschriebenen Einzelheiten mit denselben Bezugszeichen gekennzeichnet wie in Figur 2; der in Figur 5 nicht dargestellte Aufbau von Detektion, Erfassung, Abstimmung und Auswertung ist identisch mit dem in Figur 2 und wird hier nicht näher erläutert.

Die in Figur 5 gezeigte Anordnung ist immer dann sinnvoll, wenn das zu untersuchende Material MA die Transmission von Meß- und Referenzlichtstrahl M,R nicht zuläßt oder wenn aufgrund bestimmter Anordnungen des Materials MA kein Platz für die Durchlicht-Beleuchtung vorhanden ist. In der Figur 5 ist eine Auflichtanordnung für einen Festkörper dargestellt. Einsetzbar ist diese Anordnung aber beispielsweise auch für eine Prozeßbeobachtung von flüssigen oder gasförmigen Medien. Wesentlich ist, daß das zu untersuchende Material MA, im gewählten Ausführungsbeispiel soll eine absorbierende Schicht 101 eines Festkörpers in seiner Dicke bestimmt werden, auf seiner Rückseite 102, die von einem transparenten Substrat 103 gebildet wird, einen Reflektor 104 aufweist. Im dargestellten Beispiel handelt es sich hierbei um einen mit dem transparenten Substrat 103 fest verbundenen Metall-Träger. Es kann sich aber auch um einen aufgedampften Metall-Kontakt (z.B. aus Au) oder um einen externen Spiegel handeln.

Der Strahlengang S wird über einen halbdurchlässigen Spiegel 105 auf das zu untersuchende Material MA geleitet. An dem Reflektor 104 wird er reflektiert, tritt dann durch den Spiegel 105 und wird in schon beschriebener Weise (Fig.2) der Detektion DE zugeführt. Die Beleuchtung durch die Lichtquelle 20 und die Detektion DE liegen also beide auf der Auflichtseite 100 des zu untersuchenden Materials MA, was auch eine Platzeinsparung bedeutet.

Beachtet und in der Auswertung entsprechend berücksichtigt werden muß bei dieser Art der Anordnung, daß der Meßlichtstrahl M zweimal von der absorbierenden Schicht 101 geschwächt wird und daß die zu detektierende Intensität $I_{Rc}$ (s.Fig.1) des Referenzlichtstrahls R zwei Reflexionsanteile durch Reflexion an der Oberfläche der absorbierenden Schicht 101 und an dem Reflektor 104 aufweist.

Ist der Reflexionsanteil an der Oberfläche der absorbierenden Schicht 101 unbekannt, so kann dieser durch eine Beleuchtung des Materials MA nach dem Dunkelfeld-Prinzip von der Detektion DE ausgenommen werden. Die Anordnung nach diesem Prinzip ist zwar in der Figur 5 nicht dargestellt, soll aber an dieser Stelle kurz erläutert werden, da sie sich von der dargestellten Anordnung nur in Details unterscheidet. Um den an der Oberfläche der absorbierenden Schicht 101 reflektierten Lichtanteil auszublenden, damit er nicht fälschlicherweise für die Absorptionsmessung detektiert wird, wird der Strahlengang S über einen sehr kleinen Umlenkspiegel (statt halbdurchlässigem Spiegel 105) auf das zu untersuchende Material MA gelenkt. Alternativ ist auch ein großer Umlenkspiegel mit einem kleinen Loch und einer Vertauschung von Lichtquelle 20 und Detektion DE möglich. Der Lichteinfall erfolgt senkrecht zu dem Material MA und ist auf die Oberfläche der absorbierenden Schicht 101 fokussiert. Dadurch wird der an der Oberfläche reflektierte Lichtanteil exakt im Strahlengang S über den kleinen Umlenkspiegel zur Lichtquelle 20 zurückgeleitet. Er gelangt nicht in den Detektionsstrahlengang. Derselbe Effekt wird auch erreicht, wenn statt einer Fokussierung parallele Lichtstrahlen auf das zu untersuchende Material MA fallen, beispielsweise durch Anordnung des kleinen Umlenkspiegels zwischen der vierten Sammellinse 34 und dem zu untersuchenden Material MA.

Der durch die absorbierende und die transparente Schicht 101,103 hindurchgehende Lichtanteil wird an dem Reflektor 104 reflektiert. Dieser ist hierbei opak ausgebildet, so daß der Lichtanteil in einem großen Raumwinkel reflektiert wird (den gleichen Effekt bewirkt auch eine rauhe, streuende Rückseite des zu untersuchenden Materials MA). Das reflektierte Licht wird dann von der vierten Sammellinse 34, die eine entsprechend große Apertur aufweist, erfaßt und an dem kleinen Umlenkspiegel vorbei in den Detektionsstrahlengang zur Detektion DE geleitet. Bei der Auswertung ist dann wiederum die zweimalige Absorption des detektierten Lichtanteils zu berücksichtigen.

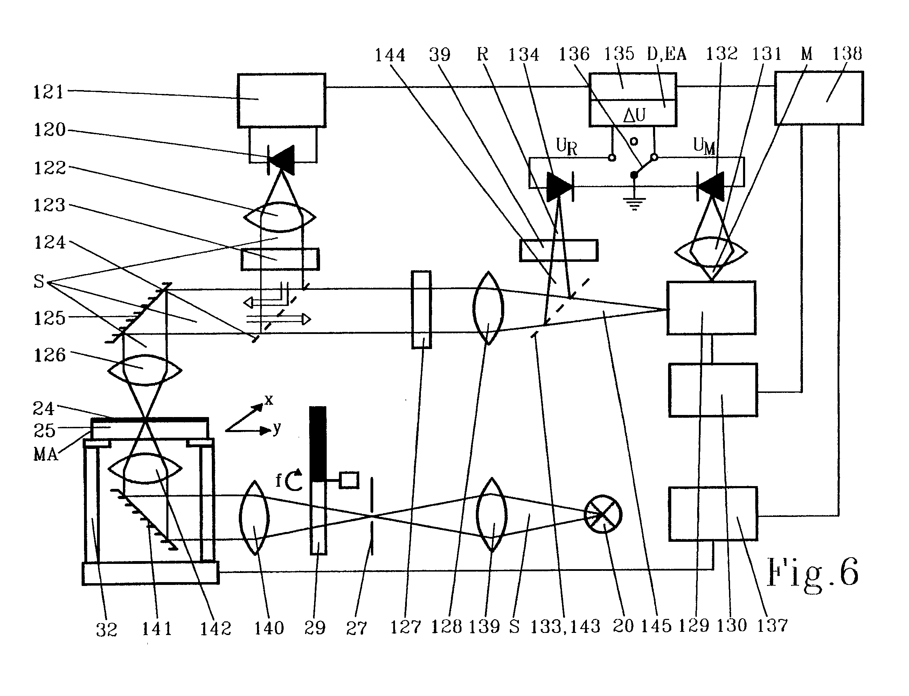

In Figur 6 ist ein Anordnungsbeispiel für die Kombination des Meßverfahrens für kleine Lichtabsorptionen mit dem an sich bekannten Lumineszenzverfahren dargestellt. Im folgenden wird dieses Verfahren nur ganz prinzipiell zur Herstellung des Zusammenhangs erläutert, wesentlich für die Erfindung ist die Kopplung beider Verfahren, die eine deutliche Verbesserung bezüglich Ablauf und Dauer der Verfahren durch die nur einmal erforderliche Justage des zu untersuchenden Materials MA sowie durch die Zuordnung der mit den beiden Methoden gemessenen Parameter zu identischen Probenpunkten erzielt. Weiterhin werden die in Figur 2 verwendeten Bezugszeichen, soweit es sich um identische Anordnungsteile handelt, übernommen.

Das Lumineszenz-Verfahren dient der Ermittlung charakteristischer Eigenschaften von Halbleitermaterialien, insbesondere der Bandkante (Absorptionskante). In technologisch wichtigen Mischkristallen wie InGaAsP oder GaAlAs kann die Bandkante durch das Mischungsverhältnis eingestellt werden. Die Bandkante ist einer der wichtigsten Designparameter in optoelektronischen Bauelementen. Aus Lumineszenz-Emissionsspektren kann dieser Parameter ermittelt werden. Für das Meßverfahren zur Bestimmung kleiner Lichtabsorptionen ist wichtig, daß aus Kenntnis der Bandkante die Meßwellenlänge optimal gewählt und der Absorptionskoeffizient der jeweils zu untersuchenden Schicht bei dieser Meßwellenlänge abgeleitet werden kann. Zur Durchführung des Lumineszenz-Meßverfahrens wird die absorbierende Schicht 24 des zu untersuchenden Materials MA mit monochromatischem Licht einer Laserdiode 120, die aus einer Stromversorgung 121 gespeist wird, bestrahlt. Dazu verläuft der Strahlengang S des Lichts über eine erste Sammellinse 122, einen Farbfilter 123 zur Herausfilterung von Untergrundstörungen, einen dichroitischen Spiegel 124, einen Umlenkspiegel 125 und eine zweite Sammellinse 126. Das Material MA wird von dem Licht zur Emission charakteristischer Strahlung angeregt (Lumineszenz-Effekt). Diese emittierte Lumineszenz-Strahlung wird über den Umlenkspiegel 125 wiederum dem dichroitischen Spiegel 124 zugeführt. Dieser hat die Eigenschaft, daß er Licht abhängig von dessen Wellenlänge entweder reflektiert oder passieren läßt. Er ist so eingestellt, daß das Licht der Laserdiode 120 reflektiert wird, während das emittierte Licht des zu untersuchenden Materials MA hindurchgelassen wird (in Fig .6 durch die Pfeile angedeutet). Nach Passieren eines weiteren Farbfilters 127 zum Abblocken der Laser-Reststrahlung wird die Lumineszenz-Strahlung mit einer dritten Sammellinse 128 in einen durchstimmbaren Monochromator 129 abgebildet. Mit einer motorischen Verstellung 130 wird der Monochromator 129 in der Wellenlänge variiert. Das spektral selektierte Licht wird hinter dem Monochromator 129 mit einer vierten Sammellinse 131 auf einen Detektor 132 abgebildet und mit diesem das Emissionsspektrum aufgenommen.

In den Strahlengang S vor dem Monochromator 129 kann ein zweiter Umlenkspiegel 133 eingebracht und so die integrale Lumineszenz - ein wichtiges Maß für die Kristallqualität - mit einem weiteren Detektor 134 gemessen werden. Die Signale der Detektoren 132,134 werden auf Differenzeingänge eines Lock-In-Verstärkers 135 gegeben, wobei über einen Schalter 136 der jeweils nicht benötigte Detektor 132,134 kurzgeschlossen wird. Die Steuerung der Wellenlängenverstellung 130 und des Meßtischs 32 über einen Schrittmotor 137 werden von einem Computer 138 ausgeführt. Dieser dient gleichzeitig der Auswertung.

Das Meßverfahren zur Bestimmung kleiner Lichtabsorptionen LA wird nun folgendermaßen in den beschriebenen Aufbau für das Lumineszenz-Meßverfahren eingekoppelt : Der von der Lichtquelle 20 ausgehende Strahlengang S wird zunächst in bereits beschriebener Weise über eine Anordnung aus fünfter Sammellinse 139, Raumfilter 27, Chopper 29 und sechster Sammellinse 140 auf einen dritten Umlenkspiegel 141 geleitet. Dieser lenkt den Strahlengang S über eine siebte Sammellinse 142 auf das zu untersuchende Material MA. Nach der Transmission wird der Strahlengang S über die zweite Sammellinse 126, den Umlenkspiegel 125, den dichroitischen Spiegel 124, der im dargestellten Beispiel nur die Wellenlänge des Lichts der Laserdiode 120 nicht hindurchtreten läßt, das Farbfilter 127 und die dritte Sammellinse 128 geführt. Statt des zweiten Umlenkspiegels 133 wird nun ein Strahlteiler 143 in den Strahlengang eingebracht. Dieser teilt den Lichtstrahl S in einen ersten Teillichtstrahl 144 und einen zweiten Teillichtstrahl 145 auf. Der reflektierte erste Teillichtstrahl 144 wird dann durch das jetzt eingefügte Referenzwellenlängen-Filter 39 gefiltert, so daß der Referenzlichtstrahl R entsteht. Der Monochromator 129 wird auf die Meßwellenlänge $\lambda_M$ eingestellt, und aus dem zweiten Teillichtstrahl 130 wird der Meßlichtstrahl M herausgefiltert. Meß- und Referenzlichtstrahl M,R werden dann mit den Detektoren 132 und 134 gleichzeitig detektiert und Meß- und Referenzsignal $U_M,U_R$ der Differenzbildung D zugeführt. Der Schalter 136 ist dabei in einer Nullstellung und schließt keinen der beiden Detektoren 132,134 kurz. Zur Gewinnung des Referenzsignals $U_R$ kann entweder kurzzeitig der Detektor 132 über den Schalter 136 kurzgeschlossen werden oder das Referenzsignal $U_R$ wird zur Erreichung einer hohen Meßgeschwindigkeit parallel auf einen zweiten Lock-In-Verstärker geleitet (nicht dargestellt).

Differenzsignal $\Delta U$ und Referenzsignal $U_R$ sind - wie bereits ausgeführt - zur Berechnung der Schichtdicke des zu untersuchenden Materials MA aus den gemessenen kleinen Lichtabsorptionen erforderlich. Die für die direkte Messung der kleinen Lichtabsorptionen erforderliche automatische Berücksichtigung B des natürlichen Intensitätsunterschieds $\Delta I_N$ erfolgt bei der dargestellten Anordnung zur gekoppelten Durchführung beider Meßverfahren durch die elektronische Abstimmung EA bei der Differenzbildung D.

**Patentansprüche**

1. Meßverfahren zur Bestimmung kleiner Lichtabsorptionen in beliebigen Materialien mit einer zumindest quasi-gleichzeitigen Detektion der Transmissionsintensitäten eines Meß- und eines Referenzlichtstrahls derart unterschiedlicher Wellenlängen, daß im wesentlichen der Meßlichtstrahl absorbiert wird, und mit einer analogen gemeinsamen Erfassung der detektierten Meß- und Referenzsignale unter Berücksichtigung des natürlichen Intensitätsunterschieds zwischen Meß- und Referenzlichtstrahl,
**dadurch gekennzeichnet, daß**
die kleinen Lichtabsorptionen (LA) direkt gemessen werden durch die analoge gemeinsame Erfassung (E) der detektierten Meß- und Referenzsignale ($U_{Mc},U_{Rc}$) in Form einer Differenzbildung (D) unter automatischer Berücksichtigung (B) des natürlichen Intensitätsunterschieds ($\Delta I_N$) zwischen Meß- und Referenzlichtstrahl (M,R) durch eine Abstimmung (AN) der gebildeten Differenz ($\Delta I_N$) auf Null ($\Delta I_b$) bei einer Messung (b) ohne das zu untersuchende Material (MA) (Fig.1).

2. Meßverfahren nach Anspruch 1,
**dadurch gekennzeichnet, daß**
die Abstimmung (AN) der gebildeten Differenz ($\Delta I_N$) auf Null ($\Delta I_b$) optisch (OA) durch Schwächung der Intensität ($I_{Ra}$) des stärkeren der beiden Lichtstrahlen (R) erfolgt (Fig. 1).

3. Meßverfahren nach Anspruch 1,
**dadurch gekennzeichnet, daß**
die Abstimmung (AN) der gebildeten Differenz ($\Delta I_N$) auf Null ($\Delta I_b$) elektronisch (EA) durch Einstellen einer entsprechenden Gewichtung bei der Differenzbildung (D) erfolgt (Fig. 1).

4. Meßverfahren nach Anspruch 2 oder 3,
**dadurch gekennzeichnet, daß**
Meß- und Referenzlichtstrahl (M,R) jeweils von einer monochromatischen Lichtquelle (80,81) erzeugt werden (Fig. 4).

5. Meßverfahren nach Anspruch 2 oder 3,
**dadurch gekennzeichnet, daß**
Meß- und Referenzlichtstrahl (M,R) aus einem nach der Material-Transmission optisch geteilten (35) Lichtstrahl einer einzigen Lichtquelle (20) herausgefiltert werden (Fig.2).

6. Meßverfahren nach Anspruch 4 oder 5,
**dadurch gekennzeichnet, daß**
Meß- und Referenzlichtstrahl (M,R) alternierend in einer ersten (f1) und der Referenzlichtstrahl (R) zusätzlich in einer zweiten (f2) Frequenz getaktet werden (Fig.3).

7. Meßverfahren nach Anspruch 5,
**dadurch gekennzeichnet, daß**
der gemeinsame Lichtstrahl getaktet (29) wird (Fig.2).

8. Meßverfahren nach Anspruch 5,
**dadurch gekennzeichnet, daß**
die Detektion (DE) der Transmissionsintensitäten ($I_{Mc},I_{Rc}$) von Meß- und Referenzlichtstrahl (M,R) gleichzeitig erfolgt (Fig.1).

9. Meßverfahren nach einem der vorangehenden Ansprüche,
**dadurch gekennzeichnet, daß**
die kleinen Lichtabsorptionen (LA) ortsabhängig (32) gemessen werden (Fig.2).

10. Meßverfahren nach Anspruch 9,
**dadurch gekennzeichnet, daß**
Meß- und Referenzlichtstrahl (M,R) auf den Meßort fokussiert (33) werden (Fig.2).

11. Meßverfahren nach Anspruch 9,
**dadurch gekennzeichnet, daß**
bei einem Festkörper mit rauher Rückseite als zu untersuchendes Material der Fokus auf dessen Rückseite liegt.

12. Meßverfahren nach einem der vorangehenden Ansprüche,
**dadurch gekennzeichnet, daß**
bei einem zu untersuchenden Material (MA) mit opaker oder reflektierender Rückseite (102) die Detektion (DE) der Transmissionsintensitäten ($I_{Mc}$,$I_{Rc}$) auf der Auflichtseite (100) erfolgt (Fig.5).

13. Meßverfahren nach Anspruch 12,
**dadurch gekennzeichnet, daß**
das zu untersuchende Material (MA) nach dem Dunkelfeld-Prinzip beleuchtet wird.

14. Meßverfahren nach einem der vorangehenden Ansprüche,
**dadurch gekennzeichnet, daß**
es mit dem Lumineszenz-Meßverfahren zur Ermittlung der charakteristischen Eigenschaften des zu untersuchenden Materials (MA) gekoppelt ist (Fig.6).

Fig.1

EP 0 443 702 A2

Fig.2

EP 0 443 702 A2

Fig.3

EP 0 443 702 A2

Fig.4

Fig.5

Fig.6

EP 0 443 702 A2